# EUROPEAN PATENT APPLICATION

(11) **EP 4 465 245 A1**
(43) Date of publication of application: **20.11.2024**
(21) Application number: 22920414.4
(22) Date of filing: 26.10.2022
(51) Int. Cl.: G06T 19/00, G01B 11/00, G01B 11/24

(54) **CALCULATION METHOD AND CALCULATION DEVICE**

(30) Priority: 14.01.2022 JP 2022004175
(71) Applicant: Panasonic Intellectual Property Management Co., Ltd., Kadoma-shi, Osaka 571-0057 (JP)
(72) Inventor: TERANISHI, Kensho, Kadoma-shi, Osaka 571-0057 (JP); MATSUNOBU, Toru, Kadoma-shi, Osaka 571-0057 (JP); YOSHIKAWA, Satoshi, Kadoma-shi, Osaka 571-0057 (JP)
(74) Representative: Grünecker Patent- und Rechtsanwälte PartG mbB
(86) International application number: PCT/JP2022/039839
(87) International publication number: WO 2023/135891

(57) **Abstract**

A calculation method according to one aspect of the present disclosure obtains three-dimensional points that represent an object in a space on a computer, each indicating a position on the object (S151), classifies the three-dimensional points into groups based on the respective normal directions of the three-dimensional points (S152), and calculates a second accuracy of each of the groups, the second accuracy increasing with an increase of a first accuracy of at least one three-dimensional point belonging to the group (S153). The three-dimensional points are generated by a sensor detecting light from the object from different positions and in different directions. The normal direction of each three-dimensional point is determined based on the different directions used to generate the three-dimensional point.

## Description

### [Technical Field]

The present disclosure relates to a calculation method and a calculation device.

### [Background Art]

Patent Literature (PTL) 1 discloses a technique for representing a structure using a three-dimensional point cloud.

### [Citation List]

### [Patent Literature]

[PTL 1] Japanese Unexamined Patent Application Publication No. 2017-130146

### [Summary of Invention]

### [Technical Problem]

The present disclosure has an object to provide a calculation method and the like that can calculate an accuracy for each of groups to which three-dimensional points belong.

### [Solution to Problem]

A calculation method according to one aspect of the present disclosure includes: obtaining three-dimensional points that represent an object in a space on a computer, each of the three-dimensional points indicating a position on the object; classifying each three-dimensional point in the three-dimensional points into one of groups based on a normal direction of the each three-dimensional point; and calculating a second accuracy of each group in the groups, the second accuracy increasing with an increase of a first accuracy of at least one three-dimensional point belonging to the each group. The three-dimensional points are generated by a sensor detecting light from the object from different positions and in different directions. The normal direction of each three-dimensional point in the three-dimensional points is determined based on the different directions used to generate the each three-dimensional point.

### [Advantageous Effects of Invention]

The present disclosure can provide a calculation method and the like that can calculate an accuracy for each of groups to which three-dimensional points belong.

### [Brief Description of Drawings]

[FIG. 1]

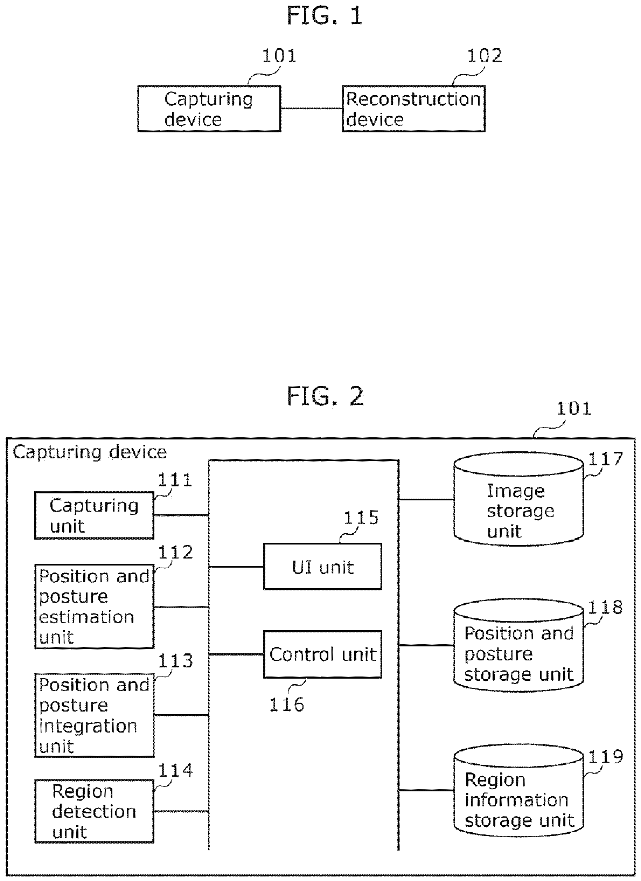

   FIG. 1 is a block diagram illustrating a configuration of a three-dimensional reconstruction system according to an embodiment of the present disclosure.
[FIG. 2]
   FIG. 2 is a block diagram illustrating a configuration of a capturing device according to an embodiment of the present disclosure.
[FIG. 3]

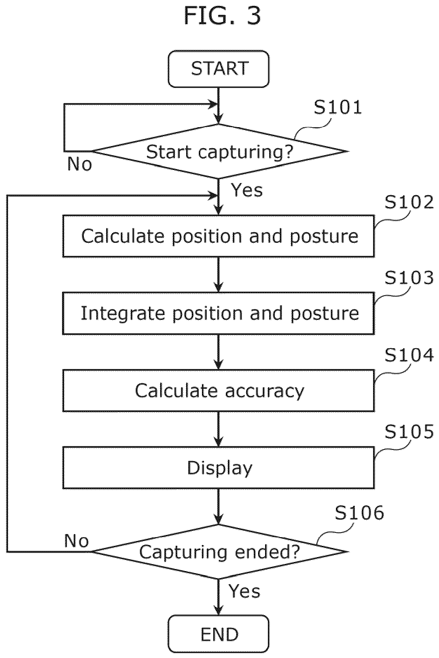

   FIG. 3 is a flowchart illustrating operations performed by a capturing device according to an embodiment of the present disclosure.
[FIG. 4]

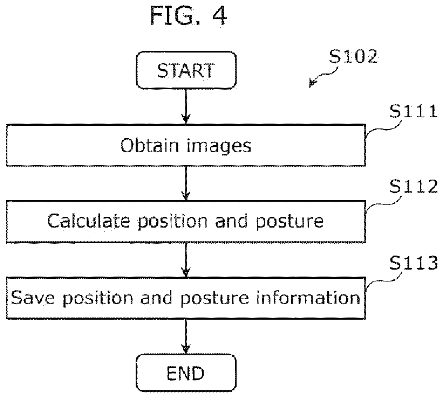

   FIG. 4 is a flowchart illustrating a process of estimating position and posture according to an embodiment of the present disclosure.
[FIG. 5]

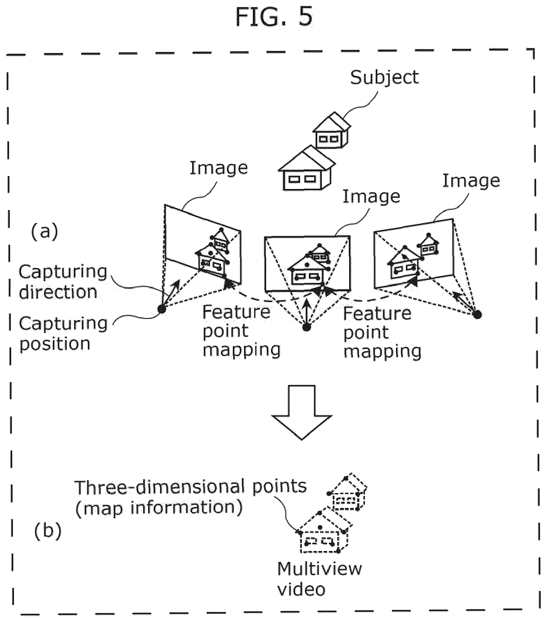

   FIG. 5 is for explaining a method of generating three-dimensional points according to an embodiment of the present disclosure.
[FIG. 6]

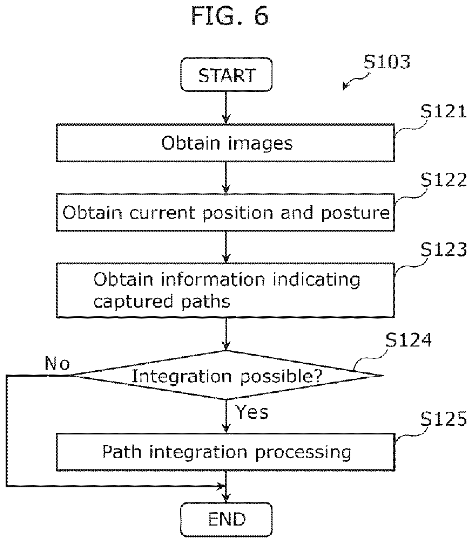

   FIG. 6 is a flowchart illustrating a process of integrating position and posture according to an embodiment of the present disclosure.
[FIG. 7]

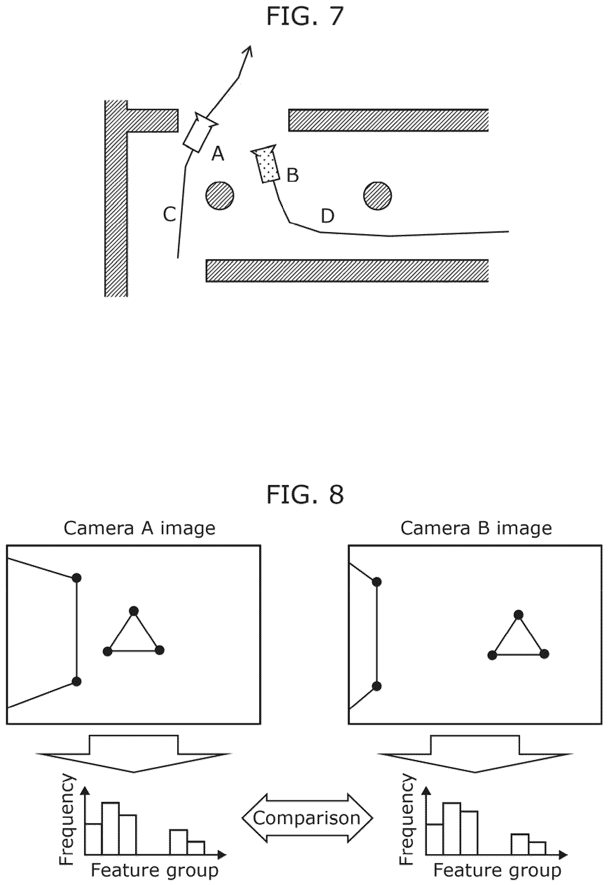

   FIG. 7 is a plan view illustrating capturing in a target space according to an embodiment of the present disclosure.
[FIG. 8]
   FIG. 8 is for explaining image examples and an example of a comparison process according to an embodiment of the present disclosure.
[FIG. 9]

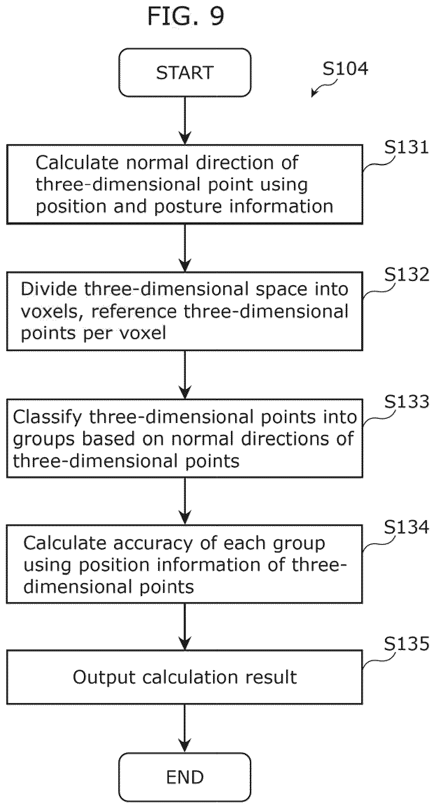

   FIG. 9 is a flowchart illustrating an accuracy calculation process according to an embodiment of the present disclosure.
[FIG. 10]

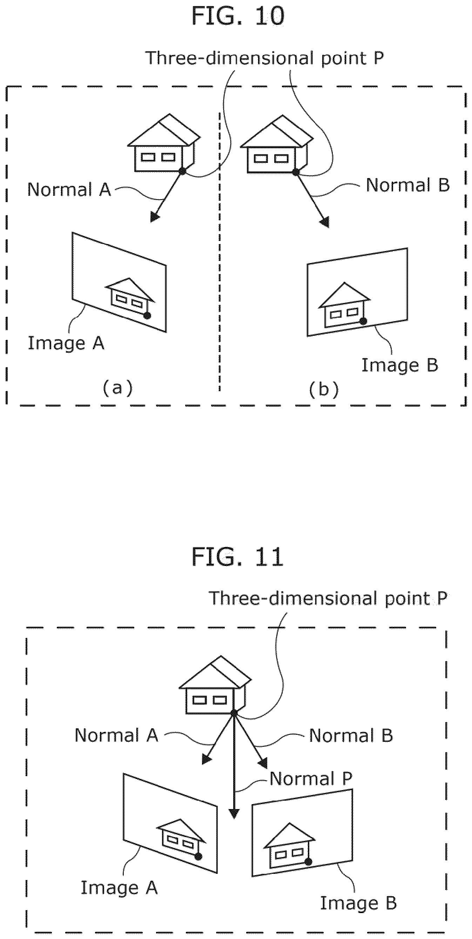

   FIG. 10 is for explaining a calculation method of normal directions of three-dimensional points according to an embodiment of the present disclosure.
[FIG. 11]
   FIG. 11 is for explaining a calculation method of normal directions of three-dimensional points according to an embodiment of the present disclosure.
[FIG. 12]

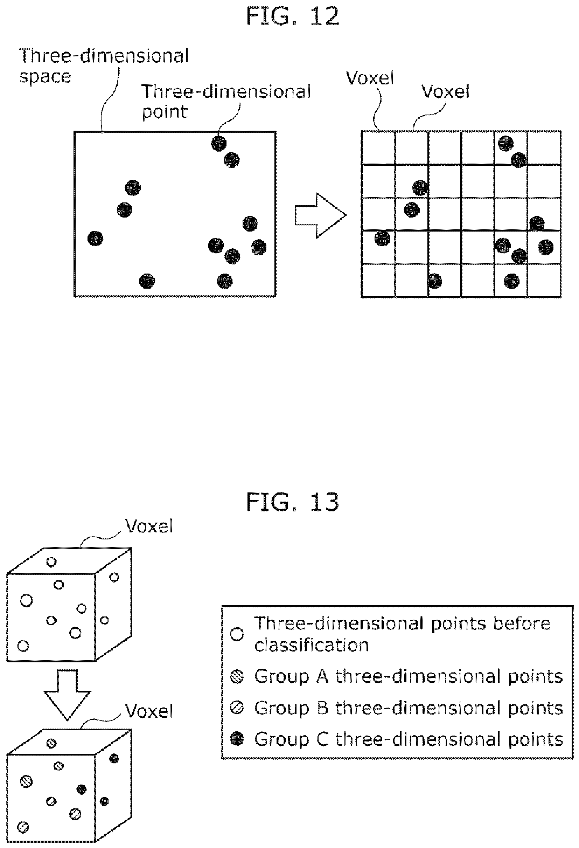

   FIG. 12 is for explaining a classification method of three-dimensional points according to an embodiment of the present disclosure.
[FIG. 13]
   FIG. 13 is for explaining a classification method of three-dimensional points according to an embodiment of the present disclosure.
[FIG. 14]

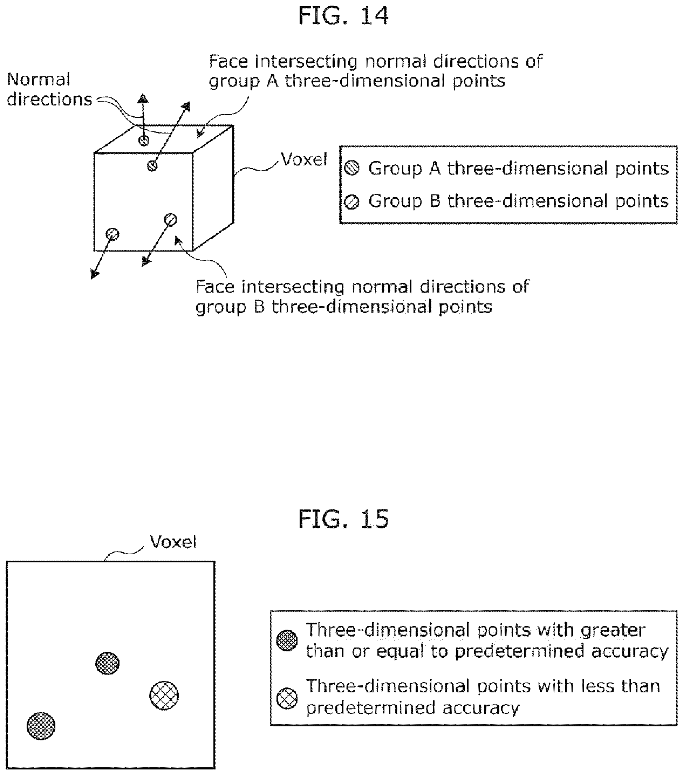

   FIG. 14 is for explaining a classification method of three-dimensional points according to an embodiment of the present disclosure.
[FIG. 15]
   FIG. 15 is for explaining a calculation method of accuracies of groups according to an embodiment of the present disclosure.
[FIG. 16]

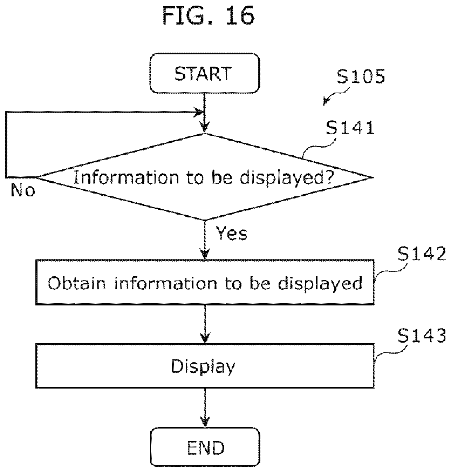

   FIG. 16 is a flowchart illustrating a display process according to an embodiment of the present disclosure.
[FIG. 17]

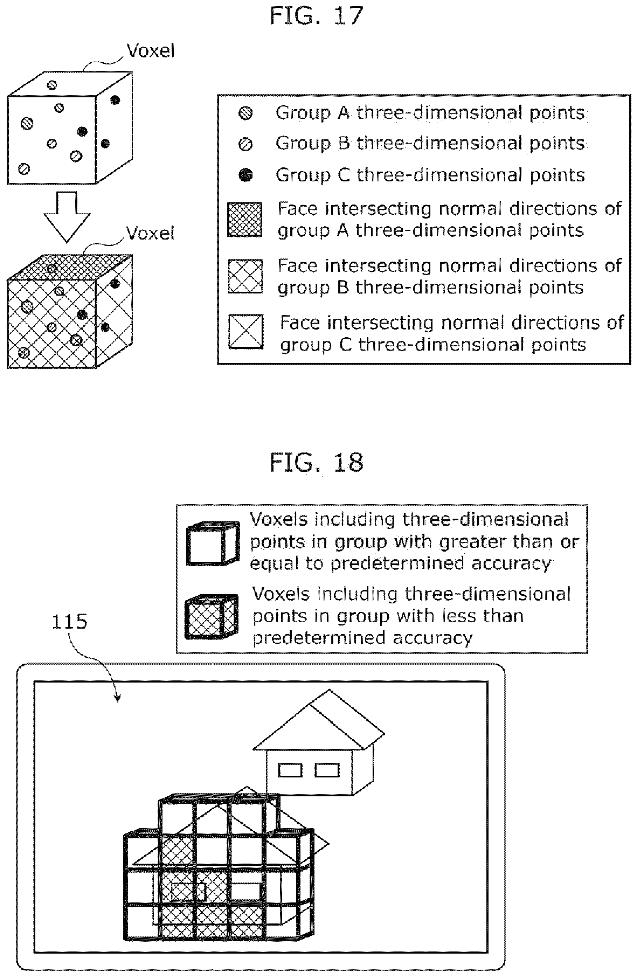

   FIG. 17 illustrates a display example of a voxel according to an embodiment of the present disclosure.
[FIG. 18]
   FIG. 18 illustrates a display example of a UI screen according to an embodiment of the present disclosure.
[FIG. 19]

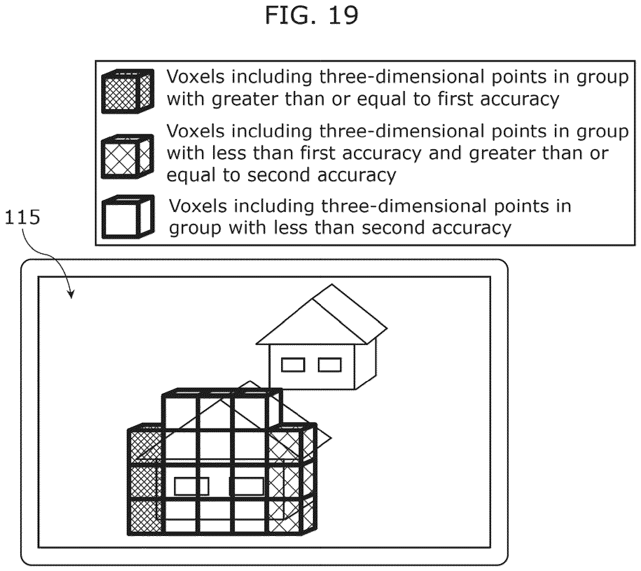

   FIG. 19 illustrates a display example of a UI screen according to an embodiment of the present disclosure.
[FIG. 20]

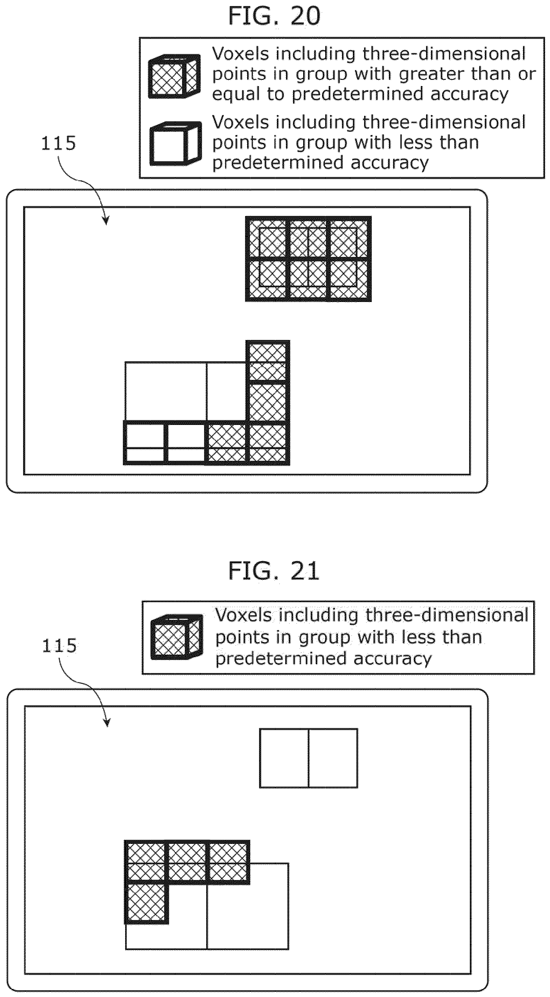

   FIG. 20 illustrates a display example of a UI screen according to an embodiment of the present disclosure.
[FIG. 21]
   FIG. 21 illustrates a display example of a UI screen according to an embodiment of the present disclosure.
[FIG. 22]

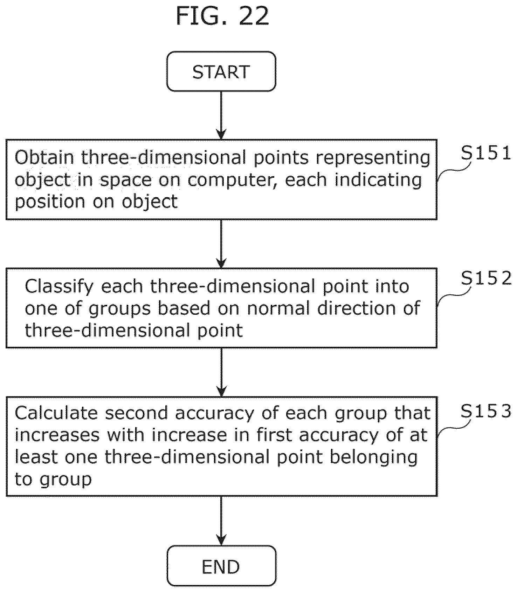

   FIG. 22 is a flowchart illustrating a calculation method according to an embodiment of the present disclosure.

### [Description of Embodiments]

### Overview of Present Disclosure

A calculation method according to one aspect of the present disclosure includes: obtaining three-dimensional points that represent an object in a space on a computer, each of the three-dimensional points indicating a position on the object; classifying each three-dimensional point in the three-dimensional points into one of groups based on a normal direction of the each three-dimensional point; and calculating a second accuracy of each group in the groups, the second accuracy increasing with an increase of a first accuracy of at least one three-dimensional point belonging to the each group. The three-dimensional points are generated by a sensor detecting light from the object from different positions and in different directions. The normal direction of each three-dimensional point in the three-dimensional points is determined based on the different directions used to generate the each three-dimensional point.

With this, three-dimensional points can be classified into groups according to directions in which the sensor detects light from the object, and the accuracy of each group can be calculated based on the accuracies of the three-dimensional points belonging to that group. Stated differently, with the calculation method according to one aspect of the present disclosure, since the three-dimensional points are classified based on the normal directions of the three-dimensional points, an accuracy for each normal direction used in the classification can be calculated.

For example, the classifying includes dividing the space into subspaces, and classifying each three-dimensional point in the three-dimensional points into the one of the groups based on the normal direction of the each three-dimensional point and a subspace in the subspaces that includes the each three-dimensional point.

With this, an accuracy can be calculated for each normal direction and each location.

For example, a first subspace in the subspaces includes a first three-dimensional point and a second three-dimensional point included in the three-dimensional points, a line extending in a normal direction of the first three-dimensional point intersects a first face among faces defining the first subspace, and the classifying includes classifying the first three-dimensional point and the second three-dimensional point into a same group when a line extending in a normal direction of the second three-dimensional point intersects the first face.

This allows the three-dimensional points to be classified into groups per face, according to the normal directions of the three-dimensional points.

For example, the sensor is any one or combination of a LiDAR sensor, a depth sensor, and an image sensor.

For example, for each three-dimensional point in the three-dimensional points, a composite direction of the different directions used to generate the each three-dimensional point is opposite to the normal direction of the each three-dimensional point.

For example, each of the groups corresponds to any one of faces defining the subspaces, the classifying includes classifying each three-dimensional point in the three-dimensional points into the one of the groups that corresponds to, among the faces defining the subspace including the each three-dimensional point, an intersecting face that intersects a line extending in the normal direction of the each three-dimensional point, and the calculation method further includes displaying the intersecting face in a color according to an accuracy of the group corresponding to the intersecting face.

With this, since the intersecting face is displayed in a color according to the accuracy of the group corresponding to the intersecting face, it is possible to provide a display that helps the user adjust the orientation of the sensor being operated.

For example, the displaying includes displaying the intersecting face in one color when the accuracy of the group corresponding to the intersecting face is greater than or equal to a predetermined accuracy and in a different color when the accuracy of the group corresponding to the intersecting face is less than the predetermined accuracy.

With this, since the intersecting face is displayed in one color when the accuracy of the group corresponding to the intersecting face is greater than or equal to a predetermined accuracy and in a different color when the accuracy of the group corresponding to the intersecting face is less than the predetermined accuracy, it is possible to provide a display that helps the user adjust the orientation of the sensor being operated.

For example, each of the groups corresponds to any one of the subspaces, and the calculation method further includes displaying each subspace in the subspaces in a color according to an accuracy of the group corresponding to the each subspace.

With this, since each subspace is displayed in a color according to the accuracy of the group corresponding to the subspace, it is possible to provide a display that helps the user adjust the orientation of the sensor being operated.

For example, the displaying includes displaying, among the subspaces, only a subspace corresponding to a group with an accuracy less than a predetermined accuracy.

With this, since only a subspace corresponding to a group with an accuracy less than a predetermined accuracy among the subspaces is displayed, it is possible to provide a display that helps the user adjust the orientation of the sensor being operated.

For example, the calculating includes, for each group in the groups, extracting a predetermined number of three-dimensional points from one or more three-dimensional points belonging to the each group, and calculating an accuracy of the each group based on an accuracy of each of the predetermined number of three-dimensional points extracted.

This both reduces the amount of processing and makes it possible to appropriately calculate the accuracy of the groups.

For example, the calculating includes calculating an accuracy of each group in the groups based on a reprojection error indicating an accuracy of each of one or more three-dimensional points belonging to the each group.

This makes it possible to appropriately calculate the three-dimensional points.

For example, the calculation method further includes displaying accuracies of the groups superimposed on a second three-dimensional model that is formed of at least a portion of the three-dimensional points and has a lower resolution than a first three-dimensional model formed of the three-dimensional points.

With this, since the accuracies of the groups are displayed superimposed on the second three-dimensional model, it is possible to provide a display that helps the user adjust the orientation of the sensor being operated.

For example, the displaying includes displaying the accuracies of the groups superimposed on a bird's-eye view of the second three-dimensional model.

With this, since the accuracies of the groups are displayed superimposed on a bird's eye view of the second three-dimensional model, it is possible to provide a display that helps the user adjust the orientation of the sensor being operated.

For example, the sensor is an image sensor, and the calculation method further includes displaying accuracies of the groups superimposed on an image captured by the image sensor and used to generate the three-dimensional points.

With this, since the accuracies of the groups are displayed superimposed on an image captured by the capturing device, it is possible to provide a display that helps the user adjust the orientation of the sensor being operated.

For example, the calculation method further includes displaying accuracies of the groups superimposed on a map of a target space in which the object is located.

With this, since the accuracies of the groups are displayed superimposed on a map, it is possible to provide a display that helps the user adjust the orientation of the sensor being operated.

For example, the calculation method further includes displaying accuracies of the groups while the sensor is detecting light from the object.

With this, it is possible to provide a display that helps the user adjust the orientation of the sensor being operated while the user is detecting light from an object.

For example, the calculation method further includes calculating a direction opposite to a composite direction of two or more normal directions of, among the three-dimensional points, two or more three-dimensional points belonging to a first group included in the groups.

This makes it possible to calculate a direction corresponding to each of the groups.

A calculation device according to one aspect of the present disclosure includes a processor and memory. Using the memory, the processor executes: obtaining three-dimensional points that represent an object in a space on a computer, each of the three-dimensional points indicating a position on the object; classifying each three-dimensional point in the three-dimensional points into one of groups based on a normal direction of the each three-dimensional point; and calculating a second accuracy of each group in the groups, the second accuracy increasing with an increase of a first accuracy of at least one three-dimensional point belonging to the each group. The three-dimensional points are generated by a sensor detecting light from the object from different positions and in different directions. The normal direction of each three-dimensional point in the three-dimensional points is determined based on the different directions used to generate the each three-dimensional point.

This achieves the same advantageous effects as the calculation method according to one aspect of the present disclosure.

General or specific aspects of the present disclosure may be realized as a system, a method, an integrated circuit, a computer program, a computer-readable recording medium such as a CD-ROM, or any given combination thereof.

Hereinafter, embodiments of the present disclosure will be described in detail with reference to the drawings. Each embodiment described below illustrates one specific example of the present disclosure. The numerical values, shapes, materials, elements, the arrangement and connection of the elements, steps, order of the steps, etc., indicated in the following embodiments are mere examples, and therefore do not intend to limit the present disclosure. Therefore, among the elements in the following embodiments, those not recited in any of the independent claims are described as optional elements.

### Embodiment

### Configuration

Conventionally, there is a technique that uses input of information (detection results) generated by detecting a space targeted for detection (i.e., a target space) such as a person or a house using a sensor such as a camera, a depth sensor, or a Light Detection and Ranging, Laser Imaging Detection and Ranging (LiDAR) sensor to generate a three-dimensional model of the target space based on the position and posture of the sensor. For example, an image generated by capturing a subject with a camera is used as input, three-dimensional points are generated based on the position and posture of the camera, and a three-dimensional model of the subject formed of the three-dimensional points is generated. The generation of such a three-dimensional model is utilized in applications such as surveying at construction sites.

Here, there are cases where the accuracy (reliability) of the three-dimensional points generated from detection results (detection data) obtained by a user detecting the target space using a sensor, such as an image of the target space captured by the user using a camera, or more specifically, image data obtained by the user using a camera to capture the target space, is low. When the accuracy of the three-dimensional points (more specifically, the position information of the three-dimensional points) is low, there are cases in which the three-dimensional model formed of the three-dimensional points cannot be generated. In such cases, the user is required to re-detect the target space using the sensor. A technique for enabling a user to efficiently detect the target space using a sensor so that the user can obtain detection results for generating highly accurate three-dimensional points is therefore desired. In the three-dimensional reconstruction system according to an embodiment of the present disclosure, in order to enable a user to efficiently detect the target space using a sensor so that the user can obtain detection results for generating highly accurate three-dimensional points, the position to be detected by the sensor is displayed so as to inform the user of the position.

FIG. 1 is a block diagram illustrating a configuration of a three-dimensional reconstruction system according to an embodiment of the present disclosure.

The three-dimensional reconstruction system according to the present embodiment is a system that generates a three-dimensional model of a target space, such as a three-dimensional map, using detection results of a space targeted for detection (hereinafter "target space") by a sensor.

As used herein, a three-dimensional model refers to a representation on a computer of an object (the detection target) in the target space detected by the sensor. A three-dimensional model includes, for example, position information of each three-dimensional location on the detection target. In the present embodiment, the sensor is a camera, and detects the target space (more specifically, the detection target positioned in the target space) by capturing the detection target and generating an image.

The three-dimensional reconstruction system includes capturing device 101 and reconstruction device 102.

Capturing device 101 is a terminal device used by the user, and is, for example, a portable terminal such as a tablet terminal, smartphone, or notebook personal computer. Capturing device 101 includes functions such as a capturing function using a camera, a function of estimating the position and the posture (hereinafter "position and posture") of the camera, and a function of displaying the accuracy of a three-dimensional model formed of three-dimensional points (also referred to as a three-dimensional point cloud) generated based on the capturing result of the camera.

As used herein, the accuracy of a three-dimensional model refers to accuracy in terms of the extent to which a three-dimensional model faithfully reproduces the actual target space. For example, the accuracy of a three-dimensional model is calculated based on an error between the position information of the three-dimensional points constituting the three-dimensional model and the actual position. For example, the higher the accuracy of a three-dimensional model, the smaller the error between the position information of the three-dimensional points constituting the three-dimensional model and the actual position , and the lower the accuracy of the three-dimensional model, the greater the error between the position information of the three-dimensional points constituting the three-dimensional model and the actual position. For example, when generation of a three-dimensional model is difficult (for example, when a three-dimensional model cannot be generated), the accuracy of the three-dimensional model may be determined to be low.

Capturing device 101 transmits the captured image (image data) and the position and posture (more specifically, position and posture information indicating the position and posture) to reconstruction device 102 during and after capturing.

Here, an image refers to, for example, a moving image, but the image may be a plurality of still images.

For example, capturing device 101 estimates the position and posture of the camera during capturing, determines a region where capturing has been performed (also referred to as a captured region) and/or a region where capturing has not been performed using at least one of (i) the position and posture or (ii) the three-dimensional point cloud, and presents at least one of the region where capturing has been performed or the region where capturing has not been performed to the user.

Here, a region where capturing has not been performed refers to, for example, a region where capturing has not yet been performed at that point in time while capturing the target space (for example, a region hidden by other objects), as well as a region where capturing was performed but three-dimensional points could not be obtained. A region where capturing has not been performed is a region where the accuracy of the three-dimensional model of the target space is low. On the other hand, a captured region refers to a region of the target space where three-dimensional points have been obtained. Stated differently, a captured region is a region where the accuracy of the three-dimensional model of the target space is high.

Capturing device 101 may estimate the position and posture of capturing unit 111 while capturing the subject, and perform three-dimensional shape reproduction (i.e., generate a three-dimensional model).

Reconstruction device 102 is, for example, a server connected to capturing device 101 via a network or the like. Reconstruction device 102 obtains an image captured by capturing device 101 and generates a three-dimensional model using the obtained image. For example, reconstruction device 102 may use the position and posture of the camera as estimated by capturing device 101, or estimate the position and posture of the camera from the obtained image.

Data may be transferred between capturing device 101 and reconstruction device 102 offline via a hard disk drive (HDD) or the like, or over a network on the fly.

The three-dimensional model generated by reconstruction device 102 may be a three-dimensional point cloud that densely reproduces the three-dimensional space, or a collection of three-dimensional meshes. The three-dimensional point cloud generated by capturing device 101 is a collection of three-dimensional points that sparsely three-dimensionally reproduce feature points of an object, such as the corners of an object, in the space. Stated differently, the three-dimensional model formed of the three-dimensional point cloud (i.e., the three-dimensional points) generated by capturing device 101 is a model with lower spatial resolution than the three-dimensional model generated by reconstruction device 102. Stated differently, the three-dimensional model (the three-dimensional point cloud) generated by capturing device 101 is a simpler model than the three-dimensional model generated by reconstruction device 102.

A simple model is, for example, a model with a small amount of information, a model that is easy to generate, or a model with low accuracy. For example, the three-dimensional model generated by capturing device 101 is a sparser three-dimensional point cloud than the three-dimensional model generated by reconstruction device 102.

FIG. 2 is a block diagram illustrating a configuration of capturing device 101 according to an embodiment of the present disclosure.

Capturing device 101 includes capturing unit 111, position and posture estimation unit 112, position and posture integration unit 113, region detection unit 114, UI unit 115, control unit 116, image storage unit 117, position and posture storage unit 118, and region information storage unit 119.

Capturing unit 111 is a capturing device such as a camera, and generates (obtains) an image (moving image) of the target space by capturing the target space. Capturing unit 111 saves the obtained image in image storage unit 117.

Note that in the following examples, a moving image is mainly used as the image, but still images may be used instead of a moving image.

In image storage unit 117, capturing unit 111 may add information for identifying the camera (for example, capturing unit 111) that performed the capturing as header information of the moving image or still images.

Capturing unit 111 is a single camera, and may, for example, capture the subject (target space) while being moved by the user. Alternatively, capturing unit 111 may be a plurality of cameras. Alternatively, for example, capturing unit 111 may include a camera and a sensor other than a camera such as a three-dimensional measuring sensor.

Position and posture estimation unit 112 is a processing unit that uses an image stored in image storage unit 117 to estimate (calculate) the three-dimensional position and posture of capturing unit 111 that captured the image. Position and posture estimation unit 112 saves the estimated position and posture (more specifically, the position and posture information) in position and posture storage unit 118. For example, position and posture estimation unit 112 uses image processing such as Visual Simultaneous Localization and Mapping (SLAM) or Structure from Motion (SfM) to estimate the position and posture. Alternatively, position and posture estimation unit 112 may estimate the position and posture of capturing unit 111 using information obtained by various sensors (a Global Positioning System (GPS) sensor or acceleration sensor) included in capturing device 101. In the former case, the position and posture can be estimated from information from capturing unit 111. In the latter case, image processing can be achieved with a low processing burden.

Position and posture estimation unit 112 generates a three-dimensional point cloud using, for example, the position and posture of capturing unit 111 and the image captured by capturing unit 111. Position and posture integration unit 113 generates, for example, three-dimensional data that is position information (also referred to as map information) indicating the position of each of the three-dimensional points.

When a plurality of captures are made in a single environment, position and posture integration unit 113 integrates the position and posture of capturing unit 111 estimated for each capture, to calculate a position and posture that can be handled in the same space. More specifically, position and posture integration unit 113 uses the three-dimensional coordinate axes of the position and posture obtained in the first capture as reference coordinate axes. Position and posture integration unit 113 then converts the coordinates of the position and posture obtained in the second and subsequent captures into coordinates in the space defined by the reference coordinate axes.

Region detection unit 114 is a processing unit that calculates the accuracy of the three-dimensional points. For example, region detection unit 114 uses images stored in image storage unit 117 and position and posture information stored in position and posture storage unit 118 to detect regions in the target space where three-dimensional reconstruction can be performed (i.e., high-accuracy regions) and regions where three-dimensional reconstruction cannot be performed (i.e., low-accuracy regions).

Note that the accuracy of the three-dimensional points refers to the accuracy of the position information of the three-dimensional points.

Regions in the target space where three-dimensional reconstruction cannot be performed are, for example, regions where images have not been captured, or low-accuracy regions that yield low accuracy in three-dimensional reconstruction, and are regions of which captured images are few (fewer than a predetermined number). A low-accuracy region is a region where, when a three-dimensional point is generated, the error between the generated three-dimensional point and the actual position is large. Region detection unit 114 saves the information of a detected region in region information storage unit 119.

More specifically, region detection unit 114 first obtains three-dimensional points that represent an object in a space on a computer and each indicate a position on the object. Next, region detection unit 114 classifies each of the three-dimensional points into one of groups based on the normal direction of the three-dimensional point. Next, region detection unit 114 calculates a second accuracy of each group in the groups. The second accuracy increases with an increase of a first accuracy of at least one three-dimensional point belonging to the group.

Here, each of the three-dimensional points is generated by capturing unit 111 capturing the object from different capturing positions and in different capturing directions. The normal direction of each three-dimensional point is determined based on the different capturing directions used to generate the three-dimensional point. More specifically, the normal direction is a direction obtained by combining the capturing positions and capturing directions of capturing unit 111 when two or more capturing results (that is, images) used to generate the three-dimensional point are obtained from among the plurality of capturing results.

The specific processing that is performed by region detection unit 114 will be described later.

UI unit 115 is a user interface (UI) that presents, to the user, the captured images and information indicating the accuracy calculated by region detection unit 114 (also referred to as region information). UI unit 115 includes an input function for the user to input a capturing start instruction and a capturing end instruction. For example, UI unit 115 is a display with a touch panel.

Control unit 116 is a processing unit that performs overall control of capturing device 101, such as capturing processing.

The processing units included in capturing device 101, such as position and posture estimation unit 112, position and posture integration unit 113, region detection unit 114, and control unit 116, are realized, for example, by memory in which a control program is stored and a processor that executes the control program.

Image storage unit 117 is a storage device that stores images generated by capturing unit 111.

Position and posture storage unit 118 is a storage device that stores information indicating the position and posture of capturing unit 111 at the time of capturing, which is generated by position and posture estimation unit 112.

Region information storage unit 119 is a storage device that stores information generated by region detection unit 114.

The information stored in region information storage unit 119 may be two-dimensional information superimposed on an image, or three-dimensional information such as three-dimensional coordinate information.

Image storage unit 117, position and posture storage unit 118, and region information storage unit 119 are realized, for example, by flash memory or an HDD. Image storage unit 117, position and posture storage unit 118, and region information storage unit 119 may be realized by a single storage device, or by mutually different storage devices.

### Operations

Next, operations performed by capturing device 101 will be described.

FIG. 3 is a flowchart illustrating operations performed by capturing device 101 according to an embodiment of the present disclosure.

In capturing device 101, capturing is started and stopped in accordance with user instructions. More specifically, capturing is started when a capturing start button on a UI (an image) displayed by UI unit 115 is pressed. When a capturing start instruction is input (Yes in S101), capturing unit 111 starts capturing. The captured image is saved in image storage unit 117.

Next, position and posture estimation unit 112 calculates the position and posture each time an image is added (S102). The calculated position and posture is saved in position and posture storage unit 118. Here, in addition to the position and posture, for example, if a three-dimensional point cloud generated by SLAM exists, the generated three-dimensional point cloud is also saved.

Next, position and posture integration unit 113 integrates the position and posture (S103). More specifically, position and posture integration unit 113 uses the position and posture estimation results and the image to determine whether it is possible to integrate the three-dimensional coordinate space of the positions and postures of the images captured up to now and the three-dimensional coordinate space of the position and posture of the newly captured image, and if possible, integrates them. Stated differently, position and posture integration unit 113 converts the coordinates of the position and posture of the newly captured image into the coordinate system of the positions and postures of the images captured up to now. With this, a plurality of positions and postures are represented in a single three-dimensional coordinate space. This makes it possible to handle data obtained over a plurality of captures in a single common coordinate system, and improve the accuracy of the position and posture estimation.

Next, region detection unit 114 calculates the accuracy of each of the three-dimensional points (S104). More specifically, region detection unit 114 uses the accuracy of each of the three-dimensional points to calculate the accuracy of each group into which the three-dimensional points have been classified according to a predetermined method. Region detection unit 114 saves region information indicating the calculated accuracy in region information storage unit 119.

Next, UI unit 115 displays the region information obtained through the above processing (S105). For example, UI unit 115 displays the accuracies of the groups calculated by region detection unit 114 while capturing unit 111 is capturing the target space.

This series of processes is repeatedly performed until capturing ends (S106). For example, these processes are repeatedly performed each time one or more frames of an image are obtained.

FIG. 4 is a flowchart illustrating a process of estimating position and posture according to an embodiment of the present disclosure. More specifically, FIG. 4 is a flowchart illustrating step S102 in greater detail.

First, position and posture estimation unit 112 obtains images from image storage unit 117 (S111).

Next, position and posture estimation unit 112 calculates the position and posture of capturing unit 111 for each image using the obtained images (S112). For example, position and posture estimation unit 112 calculates the position and posture using an image processing technique such as SLAM or SfM.

Note that when capturing device 101 includes a sensor such as an inertial measurement unit (IMU), position and posture estimation unit 112 may estimate the position and posture using information obtained by the sensor.

Position and posture estimation unit 112 may also utilize results obtained by performing calibration in advance as camera parameters such as the focal length of the lens. Alternatively, position and posture estimation unit 112 may calculate the camera parameters at the same time as estimating the position and posture.

Next, position and posture estimation unit 112 saves position and posture information indicating the calculated position and posture in position and posture storage unit 118 (S113).

Note that if calculation of the position and posture information fails, information indicating the failure may be saved in position and posture storage unit 118.

This makes it possible to know the point and time of the failure as well as what kind of image caused the failure, and this information can be utilized when re-capturing images, for example.

Position and posture estimation unit 112 generates three-dimensional points of the target space based on, for example, the images and the calculated positions and postures.

FIG. 5 is for explaining a method of generating three-dimensional points according to an embodiment of the present disclosure.

As illustrated in (a) in FIG. 5, for example, first, position and posture estimation unit 112 extracts feature points of the subject included in each of a plurality of images.

Next, position and posture estimation unit 112 performs feature point matching between the images for the extracted feature points.

Next, as illustrated in (b) in FIG. 5, position and posture estimation unit 112 generates three-dimensional points (map information) by performing triangulation using camera geometry. For example, the three-dimensional point cloud is subjected to an optimization process together with the position and posture of capturing unit 111. For example, the three-dimensional points are used as initial values for similar point matching search.

Note that the three-dimensional points (map information) may include not only the position information of the three-dimensional points, but also information representing the color of the three-dimensional points, information representing the surface shape around the three-dimensional points, and information indicating which frame (image) the three-dimensional points were generated from.

FIG. 6 is a flowchart illustrating a process of integrating position and posture according to an embodiment of the present disclosure. More specifically, FIG. 6 is a flowchart illustrating step S103 in greater detail.

First, position and posture integration unit 113 obtains images from image storage unit 117 (S121).

Next, position and posture integration unit 113 obtains the current position and posture (S122).

Next, position and posture integration unit 113 obtains at least one of the images or the positions and postures of captured paths other than the path currently being captured (S123). The captured paths can be generated, for example, from time-series information of the position and posture of capturing unit 111 obtained by SLAM. The information of the captured paths is, for example, saved in position and posture storage unit 118. More specifically, the SLAM results are saved for each capture attempt, and in the Nth (N is a natural number) capture (current path), the three-dimensional coordinate axes of the Nth capture are integrated with the three-dimensional coordinate axes of the 1st to N-1th results (past paths).

Note that position information obtained by GPS or Bluetooth may be used instead of the SLAM results.

Next, position and posture integration unit 113 determines whether integration is possible or not (S124). More specifically, position and posture integration unit 113 determines whether the current position and posture and image are similar to the positions and postures and images of the obtained captured paths, and determines that integration is possible if they are similar and determines that integration is not possible if they are not similar. More specifically, position and posture integration unit 113 calculates a feature amount representing a feature of the overall image from each image, and determines whether the images are from similar viewpoints or not by comparing them. When capturing device 101 includes a GPS and the absolute position of capturing device 101 is known, position and posture integration unit 113 may determine whether the image is an image captured at the same position as the current image or a position close thereto using that information.

If integration is possible (Yes in S124), position and posture integration unit 113 performs path integration processing (S125). More specifically, position and posture integration unit 113 calculates the relative three-dimensional positions between the current image and a reference image in which a region similar to the current image is captured. Position and posture integration unit 113 calculates the coordinates of the current image by adding the calculated relative three-dimensional positions to the coordinates of the reference image.

FIG. 7 is a plan view illustrating capturing in a target space according to an embodiment of the present disclosure. Path C is a path of camera A for which capturing and position and posture estimation have already been performed. FIG. 7 illustrates a case in which camera A is located at a predetermined position on path C. Path D is a path of camera B which is currently capturing. At this time, the current camera B and camera A are capturing images with similar fields of view. Although FIG. 7 illustrates an example where two images are obtained using different cameras, two images captured using the same camera at different times may be used. For example, camera A and camera B may each be capturing unit 111.

FIG. 8 is for explaining image examples and an example of a comparison process according to an embodiment of the present disclosure. More specifically, FIG. 8 is a illustrates image examples and an example of a comparison process in a case where capturing is performed by camera A and camera B illustrated in FIG. 7.

As illustrated in FIG. 8, position and posture integration unit 113 extracts feature amounts such as Oriented FAST and Rotated BRIEF (ORB) feature amounts for each image, and extracts feature amounts of the entire image (image-level feature amounts) based on a distribution or number of the feature amounts. For example, position and posture integration unit 113 clusters feature amounts appearing in the image like in the bag of words technique, and uses a histogram for each class as a feature amount.

Position and posture integration unit 113 compares image-level feature amounts between images, and when it determines that the images depict the same location, performs feature point matching between the images to calculate relative three-dimensional positions between each camera. Stated differently, position and posture integration unit 113 searches for images with similar image-level feature amounts from images of captured paths. Based on this relative positional relationship, position and posture integration unit 113 converts the three-dimensional positions of path D into the coordinate system of path C. With this, a plurality of paths can be represented in a single coordinate system. The positions and postures of a plurality of paths can thus be integrated.

When capturing device 101 includes a sensor that can detect an absolute position such as a GPS, position and posture integration unit 113 may perform the integration processing using the detection results of the sensor. For example, position and posture integration unit 113 may perform processing using the detection results of the sensor without performing the above-described processing using the images, and, alternatively, may use the detection results of the sensor in addition to the images. For example, position and posture integration unit 113 may narrow down the images to be compared using GPS information. More specifically, position and posture integration unit 113 may set, as comparison targets, images of positions and postures that are within a range of ±0.001 degrees or less in latitude and longitude from the current camera position according to the GPS. This reduces the amount of processing that is performed.

FIG. 9 is a flowchart illustrating an accuracy calculation process according to an embodiment of the present disclosure. More specifically, FIG. 9 is a flowchart illustrating step S104 in greater detail.

First, region detection unit 114 obtains an image from image storage unit 117, obtains a position and posture from position and posture storage unit 118, obtains a three-dimensional point cloud generated by SLAM or the like and indicating three-dimensional positions of feature points from position and posture storage unit 118, and calculates a normal direction of each three-dimensional point of the three-dimensional point cloud (S131). Stated differently, region detection unit 114 calculates a normal direction of each three-dimensional point using the position and posture information, feature point matching information, and the generated three-dimensional point cloud.

As used herein, the normal direction of a three-dimensional point indicates a predetermined orientation defined in correspondence to each three-dimensional point of the three-dimensional point cloud.

FIG. 10 and FIG. 11 are for explaining a calculation method of normals of three-dimensional points according to an embodiment of the present disclosure. More specifically, FIG. 10 and FIG. 11 are for explaining a calculation method of normal directions of three-dimensional point P generated based on image A and image B.

As illustrated in FIG. 10, first, region detection unit 114 calculates a normal of three-dimensional point P for each image used to generate three-dimensional point P, based on the position and posture of capturing unit 111 upon generating each image.

More specifically, region detection unit 114 calculates normal A of three-dimensional point P based on image A. The normal direction of normal A is, for example, the opposite direction of the normal direction of image A. More specifically, the normal direction of normal A is the opposite direction of the capturing direction of capturing unit 111 upon generating image A.

Similarly, region detection unit 114 calculates normal B of three-dimensional point P based on image B. The normal direction of normal B is, for example, the opposite direction of the normal direction of image B. More specifically, the normal direction of normal B is the opposite direction of the capturing direction of capturing unit 111 upon generating image B.

In this way, in each image, the normal direction of the three-dimensional point corresponding becomes the direction obtained by reversing the capturing direction (in other words, the optical axis direction) of capturing unit 111.

Note that the image used to calculate the normal direction of a three-dimensional point is, for example, an image used in the feature point matching of that three-dimensional point based on a covisibility graph or the like.

Next, region detection unit 114 determines a single normal of the three-dimensional point based on the normals of the three-dimensional point corresponding to each image. More specifically, as illustrated in FIG. 11, region detection unit 114 calculates a composite vector of normal A and normal B as normal P of three-dimensional point P. Even more specifically, region detection unit 114 uses a covisibility graph in Visual SLAM or SfM to determine the normal direction of three-dimensional point P by calculating normal P of three-dimensional point P by averaging the normal direction vectors of capturing unit 111 corresponding to three-dimensional point P (that is, the vectors of the capturing directions of capturing unit 111).

With this, region detection unit 114 calculates the normal direction (predetermined orientation) per three-dimensional point of the three-dimensional point cloud. More specifically, region detection unit 114 generates orientation information indicating the normal directions of the three-dimensional points.

As described above, for example, the three-dimensional points are generated based on images captured by capturing unit 111 at different positions. For example, region detection unit 114 calculates the normal direction of a three-dimensional point from a combination of the respective capturing directions in which capturing unit 111 captured the images. For example, the normal direction is obtained as a composite of the opposite directions of each of the above-mentioned capturing directions.

The sensor for obtaining the detection results to be used in the generating of the three-dimensional points does not need to be capturing unit 111, that is, an image sensor. For example, the sensor is any one or combination of a LiDAR sensor, a depth sensor, and an image sensor. For example, each three-dimensional point is generated by using a sensor to detect light from the object from different positions and in different directions. For example, for each of the three-dimensional points, a composite direction of the different directions used to generate the three-dimensional point is opposite to the normal direction of the three-dimensional point.

Generally, sensor specifications include a measurable range (a distance over which three-dimensional points can be generated). The measurable range may vary depending on the sensor. It is therefore conceivable to generate three-dimensional points using different sensors according to the distance from the measurement position. In such cases, when presenting the region to be captured to the user, which sensor should be used according to the distance to the region to be captured may be presented to the user. More specifically, information regarding sensor specifications may be stored in capturing device 101 in advance, and UI unit 115 may display a region where the generation accuracy of three-dimensional points is low and a sensor suitable for that region.

The composite of the capturing directions can be obtained, for example, by treating the capturing directions as vectors with respect to the three-dimensional point. When calculating the composite, the vector may be a unit (magnitude) vector, or may have a magnitude equal to the distance between the capturing position and the three-dimensional point.

Referring back to FIG. 9, following step S131, region detection unit 114 divides the three-dimensional space (a virtual space on the computer where the three-dimensional points are located and the three-dimensional model is generated) into voxels (subspaces), and references the three-dimensional points on a per-voxel basis (S132). Stated differently, region detection unit 114 references the three-dimensional points included in the voxels on a per-voxel basis.

Next, region detection unit 114 classifies the three-dimensional points into groups based on the normal directions of the three-dimensional points on a per-voxel basis (S133). More specifically, region detection unit 114 classifies, on a per-voxel basis, the three-dimensional points included in the voxel based on positions of faces defining the voxel, the position information of the three-dimensional points, and the orientation information.

FIG. 12, FIG. 13, and FIG. 14 are for explaining a classification method of three-dimensional points according to an embodiment of the present disclosure.

First, region detection unit 114 applies reprojection error information to each three-dimensional point in the three-dimensional point cloud, for example. A three-dimensional point is generated from a feature point in an image. Region detection unit 114 calculates an amount of deviation between a generated three-dimensional point projected onto an image and a reference feature point. This amount of deviation is the reprojection error, and region detection unit 114 applies reprojection error information to each three-dimensional point by calculating the reprojection error for each three-dimensional point. The reprojection error can be used to evaluate accuracy. More specifically, the larger the reprojection error, the lower the accuracy can be determined to be, and the smaller the reprojection error, the higher the accuracy can be determined to be.

Next, as illustrated in FIG. 12, region detection unit 114 divides the three-dimensional space into voxels. As a result, each three-dimensional point is included in one of the voxels.

Note that voxel size may be arbitrarily changed according to the arrangement of the three-dimensional points. For example, in places where three-dimensional points are densely arranged, the voxel size may be decreased so as to divide the three-dimensional space more finely compared to places with fewer three-dimensional points.

Next, as illustrated in FIG. 13, region detection unit 114 classifies the three-dimensional points included the voxels into groups. Region detection unit 114 performs this classification on a per-voxel basis.

Although the three-dimensional points are classified into three groups, namely groups A, B, and C, in the example illustrated in FIG. 13, the number of groups is arbitrary.

For example, region detection unit 114 classifies the three-dimensional points included in the voxel into groups based on positions of faces defining the voxel, the position information of the three-dimensional points, and the orientation information.

For example, as illustrated in FIG. 14, region detection unit 114 classifies three-dimensional points into the same group when the normal directions of those three-dimensional points intersect the same voxel face. In this way, for example, groups and voxel faces are associated with each other in a one-to-one correspondence. In the example illustrated in FIG. 14, the three-dimensional points belonging to group A are grouped as a group corresponding to the top face of the voxel (the upward-facing face in the figure), and the three-dimensional points belonging to group B are grouped as a group corresponding to the front face of the voxel (the forward-facing face in the figure).

In this way, for example, in the classifying of the three-dimensional points, region detection unit 114 divides the three-dimensional space into voxels and classifies each of the three-dimensional points into one of the groups based on the normal direction of the three-dimensional point and the voxel including the three-dimensional point. More specifically, in the classifying of the three-dimensional points, for example, from among the three-dimensional points, region detection unit 114 classifies, into the same group, three-dimensional points included in the same voxel and having normal directions intersecting the same face among the faces defining the same voxel. For example, a first voxel among the voxels includes a first three-dimensional point and a second three-dimensional point included in the three-dimensional points. In this case, a line extending in the normal direction of the first three-dimensional point intersects a first face among the faces defining (forming) the first voxel. Stated differently, from the perspective of the first three-dimensional point, the first face is positioned in a first normal direction. In such cases, for example, region detection unit 114 classifies the first three-dimensional point and the second three-dimensional point into the same group when a line extending in the normal direction of the second three-dimensional point intersects the first face. However, for example, region detection unit 114 does not classify the first three-dimensional point and the second three-dimensional point into the same group, but rather classifies them into different groups when a line extending in the normal direction of the second three-dimensional point does not intersect the first face.

Note that the method of classifying the three-dimensional points is not limited to a classification method using voxels. Region detection unit 114 may, for example, calculate the inner product of the normal vectors of each of two three-dimensional points, and if the inner product is greater than or equal to a predetermined value, classify the two three-dimensional points into the same group, and classify the two three-dimensional points into different groups if the inner product is less than the predetermined value. Moreover, the method of classifying the three-dimensional points is not limited to a comparison result of normal directions of two three-dimensional points. Region detection unit 114 may, for example, classify each three-dimensional point based on which of predetermined directions, such as upward, downward, leftward, or rightward directions, the normal direction of each three-dimensional point is aligned with.

Referring back to FIG. 9, following step S133, region detection unit 114 calculates the accuracy of each group and generates region information indicating the calculated accuracy (S134). For example, region detection unit 114 calculates the accuracy of each group based on the reprojection error or density of the three-dimensional points belonging to each group. For example, region detection unit 114 calculates a group to which three-dimensional points with a reprojection error lower than a predetermined error belong as a high-accuracy group. Conversely, for example, region detection unit 114 calculates a group to which three-dimensional points with a reprojection error greater than or equal to a predetermined error belong as a low-accuracy group.

FIG. 15 is for explaining a calculation method of accuracies of groups according to an embodiment of the present disclosure.

In the example illustrated in FIG. 15, when three-dimensional points (in this example, three three-dimensional points) belonging to a group corresponding to a face of a certain voxel are viewed from a predetermined position (for example, a position in the normal direction of the face), a three-dimensional point represented by a dark color has a low reprojection error (i.e., a high accuracy), and a three-dimensional point represented by a light color has a high reprojection error (i.e., a low accuracy). In such cases, for example, since more than half of the three-dimensional points belonging to the group have an accuracy greater than or equal to a predetermined accuracy, the accuracy of the group when the voxel space illustrated in FIG. 17 is viewed from a predetermined position can be determined to be high.

In this way, for example, in the calculation of the accuracy, region detection unit 114 calculates the accuracy of each group based on a reprojection error indicating an accuracy of each of one or more three-dimensional points belonging to the group.

As described above, for example, by determining which group each three-dimensional point belongs to based on the position information, the orientation information, and the position of the voxel face, the accuracy calculated per group reflects the accuracy when viewing, from outside the voxel, one or more three-dimensional points located inside the voxel, through the face of the voxel corresponding to that group. Stated differently, the accuracy of each group may be calculated according to the position and orientation from which the three-dimensional model is viewed.

Note that region detection unit 114 may calculate the accuracy based on all of the three-dimensional points belonging to the groups, or based on a portion of the three-dimensional points belonging to the groups. For example, in the calculation of the accuracy, for each of the groups, region detection unit 114 extracts a predetermined number of three-dimensional points from the one or more three-dimensional points belonging to the group, and calculates the accuracy of the group based on the accuracy of each of the extracted predetermined number of three-dimensional points. Information indicating the predetermined number and the like is stored in advance in, for example, a storage device such as an HDD included in capturing device 101. The predetermined number may be arbitrarily set and is not particularly limited.

The accuracy of the group may be calculated in two levels, such as greater than or equal to a predetermined accuracy or less than the predetermined accuracy, or determined in three or more levels.

When a plurality of three-dimensional points belong to the same group, the maximum value of the reprojection errors of the plurality of three-dimensional points may be used to calculate the accuracy, the minimum value of the reprojection errors of the plurality of three-dimensional points may be used to calculate the accuracy, the average value of the reprojection errors of the plurality of three-dimensional points may be used to calculate the accuracy, or the median value of the reprojection errors of the plurality of three-dimensional points may be used to calculate the accuracy. For example, in cases where the average value of the reprojection errors of the plurality of three-dimensional points is used, a predetermined number of three-dimensional points may be extracted (sampled) from the plurality of three-dimensional points, and the average value of the reprojection errors of the extracted number of three-dimensional points may be calculated.

When there are no three-dimensional points corresponding to a face of the voxel, the accuracy corresponding to that face may be calculated to be low, or it may be determined that a three-dimensional model located inside the voxel cannot be generated when viewed from outside the voxel through that face.

In addition to the three-dimensional points, region detection unit 114 may calculate the accuracy based on information obtained from a depth sensor or LiDAR sensor. For example, region detection unit 114 may calculate the accuracy based on information indicating the number of overlaps of three-dimensional points obtained from a depth sensor or accuracy information such as reflection intensity. For example, region detection unit 114 may calculate the accuracy using a depth image obtained from an RGB-D sensor or the like. For example, the closer the distance from the sensor, the higher the accuracy of the generated three-dimensional points tends to be, and the farther the distance, the lower the accuracy tends to be. Therefore, for example, region detection unit 114 may calculate the accuracy according to the depth. For example, region detection unit 114 may calculate (determine) the accuracy according to the distance to the region. For example, region detection unit 114 may determine the accuracy to be higher the closer the distance is. For example, the relationship between distance and accuracy may be defined linearly, or other definitions may be used.

When capturing unit 111 is a stereo camera, region detection unit 114 can generate a depth image from a disparity image, and thus may calculate the accuracy in a similar manner as when using a depth image. In such cases, for three-dimensional points positioned in regions where depth values could not be calculated from the disparity image, region detection unit 114 may determine the accuracy to be low. Alternatively, for three-dimensional points positioned in regions where depth values could not be calculated, region detection unit 114 may estimate depth values from surrounding pixels. For example, region detection unit 114 calculates an average value of 5 × 5 pixels centered on the target pixel.

Next, region detection unit 114 outputs the generated region information (S135). This region information may be an image in which information indicating the voxel and accuracy of each group corresponding to each voxel face is superimposed on an image captured by capturing unit 111, or information in which each item of information is arranged in a three-dimensional model such as a three-dimensional map.

Note that region detection unit 114 may calculate a direction opposite to a composite direction of two or more normal directions of two or more three-dimensional points belonging to a first group included in the groups. For example, region detection unit 114 may include the calculation result in the region information as a normal direction of the group.

FIG. 16 is a flowchart illustrating a display process according to an embodiment of the present disclosure. More specifically, FIG. 16 is a flowchart illustrating step S105 in greater detail.

First, UI unit 115 checks whether there is information to be displayed (display information) (S141). More specifically, UI unit 115 checks whether any new images have been added to image storage unit 117, and if so, determines that there is display information. Additionally, UI unit 115 checks whether any new information has been added to region information storage unit 119, and if so, determines that there is display information.

If there is display information (Yes in S141), UI unit 115 obtains the display information, such as images and region information (S142).

Next, UI unit 115 displays the obtained display information (S143).

Next, specific examples of the display information (more specifically, information indicating the accuracy of each group) displayed by UI unit 115 will be described.

FIG. 17 illustrates a display example of a voxel according to an embodiment of the present disclosure. FIG. 17 illustrates an example in which accuracies are displayed for each face defining the voxel.

As illustrated in FIG. 17, for example, UI unit 115 displays the accuracy on a per-group basis, using predetermined colors or shades (in FIG. 17, hatching density) or the like according to the calculated accuracy on the faces defining the voxel. For example, faces corresponding to groups with an accuracy greater than or equal to a predetermined accuracy are displayed in different colors than faces corresponding to groups with an accuracy less than the predetermined accuracy.

In this way, for example, each group corresponds to any one of the faces defining the voxel. UI unit 115 classifies each of the three-dimensional points into a group corresponding to a face (intersecting face) that intersects a line extending in the normal direction of the three-dimensional point, among the faces defining the voxel including the three-dimensional point. UI unit 115, for example, displays the intersecting face in a color according to the accuracy of the group corresponding to the intersecting face. More specifically, for example, UI unit 115 displays the intersecting face in one color when the accuracy of the group corresponding to the intersecting face is greater than or equal to a predetermined accuracy and in a different color when the accuracy of the group corresponding to the intersecting face is less than the predetermined accuracy. Threshold information indicating the predetermined accuracy and the like is stored in advance in, for example, a storage device such as an HDD included in capturing device 101. The predetermined accuracy may be arbitrarily set in advance and is not particularly limited.

FIG. 18, FIG. 19, FIG. 20, and FIG. 21 illustrate display examples of UI screens according to an embodiment of the present disclosure.

Note that in the examples illustrated in FIG. 18 through FIG. 21, for voxels including three-dimensional points, the three-dimensional points are classified into groups on a per-voxel basis.

In FIG. 18 and FIG. 19, information indicating accuracy is displayed superimposed on one of the images used to generate the three-dimensional points.

In this way, for example, UI unit 115 may display the accuracies of the groups calculated by region detection unit 114 superimposed on an image captured by capturing unit 111 and used to generate the three-dimensional points. For example, UI unit 115 may display the accuracies calculated by region detection unit 114 superimposed on the image currently being captured by capturing unit 111. Alternatively, for example, UI unit 115 displays the accuracies of the groups calculated by region detection unit 114 superimposed on a map of the target space. Map information indicating a map of the target space is stored in advance in, for example, a storage device such as an HDD included in capturing device 101.

In FIG. 20 and FIG. 21, information indicating accuracy is displayed superimposed on an image showing a bird's-eye view (a view from above) of the three-dimensional model generated by position and posture estimation unit 112.

In this way, for example, UI unit 115 displays the accuracies of the groups calculated by region detection unit 114 superimposed on a three-dimensional model (a second three-dimensional model) that is formed of at least a portion of the three-dimensional points and has a lower resolution than a three-dimensional model (a first three-dimensional model) formed of the three-dimensional points. Stated differently, UI unit 115 may display voxels in what is known as a 3D viewer. The second three-dimensional model is, for example, the three-dimensional model generated by position and posture estimation unit 112. Alternatively, for example, UI unit 115 displays the accuracies of the groups calculated by region detection unit 114 superimposed on a bird's-eye view of the three-dimensional model generated by position and posture estimation unit 112.

In the example illustrated in FIG. 18, UI unit 115 displays only those voxels corresponding to groups for which three-dimensional points have been generated but the calculated accuracy is less than a predetermined accuracy with coloring (in FIG. 18, hatching) or the like. In contrast, for voxels corresponding to groups for which the calculated accuracy is greater than or equal to a predetermined accuracy, for example, only the edges of the voxels are displayed to indicate the shape of the voxels. Portions where voxels are not displayed are, for example, portions where not a single three-dimensional point has been generated.

This allows the user to readily identify regions where accuracy is high and regions where accuracy is low.

In the example illustrated in FIG. 19, UI unit 115 displays those voxels corresponding to groups for which the calculated accuracy is greater than or equal to a predetermined second accuracy with coloring (in FIG. 19, hatching) or the like. In contrast, for voxels corresponding to groups for which the calculated accuracy is less than a predetermined second accuracy, for example, only the edges of the voxels are displayed to indicate the shape of the voxels. UI unit 115 displays those voxels corresponding to groups for which the calculated accuracy is greater than or equal to a predetermined first accuracy in a different color or shade (in FIG. 19, hatching density) from voxels corresponding to groups for which the calculated accuracy is less than the predetermined first accuracy.

In this way, for example, UI unit 115 associates each of the groups with any one of the voxels. For example, each group corresponds to a voxel that includes the three-dimensional points belonging to that group. For example, UI unit 115 displays each voxel in a color according to the accuracy of the group corresponding to the voxel.

This allows the user to readily determine which regions to prioritize for capture.

Note that UI unit 115 may color-code voxels (or voxel faces) based on the threshold as described above, or display voxels with gradation according to accuracy.

Directions in which the target region has not been captured (uncaptured directions) may be visualized. For example, UI unit 115 may indicate that the back side of a captured location has not been captured. In the example illustrated in FIG. 19, information indicating locations that have not been captured may be displayed, such as the left side of the dark voxels on the left of the figure, the right side of the slightly dark voxels on the right of the figure, and the back side of the white voxels in the center of the figure.

In the example illustrated in FIG. 20, UI unit 115 displays only those voxels corresponding to groups for which the calculated accuracy is greater than or equal to a predetermined accuracy with coloring (in FIG. 19, hatching) or the like. In contrast, for voxels corresponding to groups for which the calculated accuracy is less than the predetermined accuracy, for example, only the edges of the voxels are displayed to indicate the shape of the voxels.

This allows the user to readily identify regions where accuracy is high and regions where accuracy is low.

In the example illustrated in FIG. 21, UI unit 115 displays only those voxels corresponding to groups for which the calculated accuracy is less than a predetermined accuracy with coloring (in FIG. 19, hatching) or the like. In contrast, for voxels corresponding to groups for which the calculated accuracy is greater than or equal to a predetermined accuracy, for example, the voxels are not displayed.

In this way, for example, UI unit 115 displays only those voxels corresponding to groups with an accuracy less than a predetermined accuracy.

This allows the user to readily identify regions where accuracy is low.

Note that as described above, the information indicating accuracy may be represented by color, or by characters or symbols. Stated differently, the information may be any information that allows the user to visually discern each region.

This allows the user to know where to capture images just by looking at the image displayed by UI unit 115, and avoid missing captures and the like.

Note that for regions that should be brought to the user's attention such as low accuracy regions, a display that easily attracts the user's attention such as blinking may be used. Note that the image on which the region information is superimposed may be a past image.

UI unit 115 may also display information indicating accuracy superimposed on the image currently being captured. In such cases, the region required for display can be reduced, making it easier to view even on a small terminal such as a smartphone. In this way, the display method may be switched according to the type of terminal.

UI unit 115 may also present, using text or voice, information such as how many meters ahead of the current position a low-accuracy region occurred. This distance can be calculated from the result of the position estimation. By using text information, the user can be correctly notified of the information. When using voice, notification can be safely performed without the need to look away or perform other actions while capturing images.

Rather than displaying the region information in two dimensions on the image, the region information may be superimposed in a real space using augmented reality (AR) glasses or a head-up display (HUD). This increases the affinity with the video as seen from a viewpoint based in reality, and makes it possible to intuitively present locations that should be captured to the user.

The display of the accuracy may be updated in real time in accordance with movement of the capturing viewpoint.

This allows the user to readily identify regions such as the captured region while referring to the image from the current viewpoint of capturing unit 111.

Capturing device 101 may notify the user when estimation of the position and posture fails.

This allows the user to quickly redo the estimation when a failure occurs.

Capturing device 101 may detect that the user has returned to the position of the failure and present this to the user using text, an image, sound, vibration, or the like. For example, it is possible to detect that the user has returned to the position of the failure by using feature amounts or the like of the entire image.

Capturing device 101 may instruct the user to perform capturing again and provide instructions on the capturing method when a low-accuracy region is detected. Here, the capturing method refers to, for example, capturing that region in a larger size or the like. For example, capturing device 101 may provide this instruction using text, an image, sound, vibration, or the like.

This makes it possible to improve the quality of the obtained data, thereby improving the accuracy of the generated three-dimensional model.

The calculated accuracy may be superimposed as region information on an image from a third-person perspective such as a plan view or perspective view, rather than being superimposed on the image being captured. For example, if a three-dimensional map can be provided, the captured region and the like may be superimposed and displayed on the three-dimensional map.

If a map such as a CAD map of the target space is available at a construction site or the like, or if three-dimensional modeling has been performed at the same location in the past and generated three-dimensional map information is available, capturing device 101 may utilize that as well.

When capturing device 101 can utilize a GPS or the like, capturing device 101 may generate map information based on latitude and longitude information obtained by the GPS.

By superimposing the position and posture estimation results of capturing unit 111, the captured region and the like on a three-dimensional map and displaying them as a bird's-eye view in this manner, the user can readily identify which regions have been captured and along which paths the capturing was performed. For example, this enables the user to notice oversights that are difficult to recognize when displayed on the image being captured, such as the back side of a pillar not being captured, thereby achieving efficient capturing.

Even in an environment without CAD or the like, a third-person perspective display may be similarly used without a map. In such cases, visibility is reduced due to the lack of a reference object, but the user can identify the positional relationship between the current capturing position and the low-accuracy region.

The user can verify instances where regions expected to include objects have not been captured. The efficiency of capturing can be improved in these cases as well.

Although the example given uses a plan view, map information from other viewpoints may be used. Capturing device 101 may include a function for changing the viewpoint of the three-dimensional map. For example, a UI for the user to perform viewpoint change operations may be used.

For example, UI unit 115 may display information, included in the region information, that indicates the normal directions of the groups. This allows the user to readily identify capture directions that should be detected in order to improve the accuracy of three-dimensional points.

### Advantageous Effects, etc.

As described above, the calculation device according to the present embodiment performs the processing illustrated in FIG. 22.

FIG. 22 is a flowchart illustrating a calculation method according to an embodiment of the present disclosure.

First, a calculation device obtains three-dimensional points that represent an object in a space on a computer and each indicate a position on the object (S151). The calculation device is, for example, capturing device 101 described above. The sensor is, for example, capturing unit 111 described above. The sensor may be any sensor that can obtain detection results for generating three-dimensional points, such as a LiDAR sensor.

Next, the calculation device classifies each of the three-dimensional points into one of groups based on a normal direction of the three-dimensional point (S152).

Next, the calculation device calculates a second accuracy of each of the groups that increases with an increase of a first accuracy of at least one three-dimensional point belonging to the group (S153).

Here, each of the three-dimensional points is generated by using a sensor to detect light from the object from different positions and in different directions. Note that the light detected by the sensor may be light of any wavelength, such as visible light or near-infrared light.

For each three-dimensional point, the normal direction of the three-dimensional point is determined based on the different directions used to generate the three-dimensional point.

With this, three-dimensional points can be classified into groups according to directions in which the sensor detects light from the object, and the accuracy of each group can be calculated based on the accuracies of the three-dimensional points belonging to that group. Stated differently, with the calculation device according to one aspect of the present disclosure, since the three-dimensional points are classified based on the normal directions of the three-dimensional points, an accuracy for each normal direction used in the classification can be calculated. For example, this makes it possible to generate high-accuracy three-dimensional points (more specifically, position information of the three-dimensional points) by detecting the object in a direction opposite to a normal direction corresponding to a low-accuracy group, for example, the normal direction of any of the three-dimensional points belonging to that low-accuracy group or the average normal direction of three-dimensional points belonging to that low-accuracy group. Stated differently, the calculation method according to one aspect of the present disclosure can appropriately calculate a detection direction of a sensor for detecting information for generating high-accuracy three-dimensional points.

For example, in cases where the sensor is capturing unit 111 as in the above example, the calculation device estimates the position and posture of capturing unit 111 while capturing an image using capturing unit 111, determines, based on the estimation result, the captured portions and accuracy when viewing the target space from a plurality of directions rather than from one direction, and three-dimensionally presents the captured portions together with the accuracy while capturing.

This allows for stable acquisition of capturing data (images) by presenting capturing failures or the like to the user without performing time-consuming processing such as three-dimensional model generation, which can significantly reduce the time required for re-capturing or the like. The user can also visually comprehend the captured space in three dimensions and the generation accuracy of the three-dimensional points of the captured space in three dimensions.

For example, in the above-described classifying (S151), the calculation device divides the space on a computer into subspaces, and classifies each of the three-dimensional points into the one of the groups based on the normal direction of the three-dimensional point and the subspace that includes the three-dimensional point. The subspace is, for example, the above-described voxel.

With this, an accuracy can be calculated for each normal direction and each location.

For example, a first subspace in the subspaces includes a first three-dimensional point and a second three-dimensional point included in the three-dimensional points. For example, a line extending in the normal direction of the first three-dimensional point intersects a first face among faces defining the first subspace. For example, in the above-described classifying, the calculation device classifies the first three-dimensional point and the second three-dimensional point into the same group when a line extending in the normal direction of the second three-dimensional point intersects the first face. The faces defining the subspace are, for example, the faces of the above-described voxel.

This allows the three-dimensional points to be classified into groups per face, according to the normal directions of the three-dimensional points.

For example, the sensor is any one or combination of a LiDAR sensor, a depth sensor, and an image sensor.

For example, the sensor is an image sensor, i.e., a capturing device (camera), and the three-dimensional points are generated based on images captured by the capturing device at different positions, and the normal direction is obtained as a composite of the capturing directions from which the capturing device captured the images. The capturing device is, for example, capturing unit 111 described above.

Generating three-dimensional points based on an image captured by a capturing device is a simpler process compared to laser measurement such as LiDAR. Therefore, according to this, the normal direction of a three-dimensional point can be appropriately determined based on the capturing direction of the capturing device, even for a three-dimensional point that was generated in a simple manner.

For example, for each of the three-dimensional points, a composite direction of the different directions used to generate the three-dimensional point is opposite to the normal direction of the three-dimensional point.

For example, when the sensor is a capturing device, the normal direction is obtained as a composite of the opposite directions of each of the above-mentioned capturing directions.

For example, each of the groups corresponds to any one of faces defining the subspaces. For example, in the above-described classifying, the calculation device classifies each three-dimensional point into the group that corresponds to, among the faces defining the subspace including the three-dimensional point, an intersecting face that intersects a line extending in the normal direction of the three-dimensional point. For example, the calculation device further displays the intersecting face in a color according to the accuracy of the group corresponding to the intersecting face.

With this, since the intersecting face is displayed in a color according to the accuracy of the group corresponding to the intersecting face, it is possible to provide a display that helps the user adjust the orientation of the sensor being operated.

For example, the calculation device displays the intersecting face in one color when the accuracy of the group corresponding to the intersecting face is greater than or equal to a predetermined accuracy and in a different color when the accuracy of the group corresponding to the intersecting face is less than the predetermined accuracy.

With this, since the intersecting face is displayed in one color when the accuracy of the group corresponding to the intersecting face is greater than or equal to a predetermined accuracy and in a different color when the accuracy of the group corresponding to the intersecting face is less than the predetermined accuracy, it is possible to provide a display that helps the user adjust the orientation of the sensor being operated.

For example, each of the groups corresponds to any one of the subspaces. For example, the calculation device displays each of the subspaces in a color according to an accuracy of the group corresponding to the subspace.

With this, since each subspace is displayed in a color according to the accuracy of the group corresponding to the subspace, it is possible to provide a display that helps the user adjust the orientation of the sensor being operated.

For example, the calculation device displays, among the subspaces, only a subspace corresponding to a group with an accuracy less than a predetermined accuracy.

With this, since only a subspace corresponding to a group with an accuracy less than a predetermined accuracy among the subspaces is displayed, it is possible to provide a display that helps the user adjust the orientation of the sensor being operated.

For example, in the above-described calculating (S152), for each of the groups, the calculation device extracts a predetermined number of three-dimensional points from the one or more three-dimensional points belonging to the group, and calculates the accuracy of the group based on the accuracy of each of the extracted predetermined number of three-dimensional points.

This both reduces the amount of processing and makes it possible to appropriately calculate the accuracy of the groups.

For example, in the above-described calculating, the calculation device calculates the accuracy of each of the groups based on a reprojection error indicating an accuracy of each of the one or more three-dimensional points belonging to the group.

This makes it possible to appropriately calculate the three-dimensional points.

For example, the calculation device displays accuracies of the groups superimposed on a second three-dimensional model that is formed of at least a portion of the three-dimensional points and has a lower resolution than a first three-dimensional model formed of the three-dimensional points. The first three-dimensional model is, for example, a high-resolution three-dimensional model generated by reconstruction device 102. The second three-dimensional model is, for example, the three-dimensional model generated by capturing device 101 described above.

With this, since the accuracies of the groups are displayed superimposed on the second three-dimensional model, it is possible to provide a display that helps the user adjust the orientation of the sensor being operated.

For example, the calculation device displays the accuracies of the groups superimposed on a bird's-eye view of the second three-dimensional model.

With this, since the accuracies of the groups are displayed superimposed on a bird's eye view of the second three-dimensional model, it is possible to provide a display that helps the user adjust the orientation of the sensor being operated.

For example, the sensor is an image sensor, and the calculation device displays the accuracies of the groups superimposed on an image captured by the image sensor (an image generated by the image sensor detecting light from the object) and used to generate the three-dimensional points.

With this, since the accuracies of the groups are displayed superimposed on an image captured by the capturing device, it is possible to provide a display that helps the user adjust the orientation of the sensor being operated.

For example, the calculation device displays the accuracies of the groups superimposed on a map of the target space.

With this, since the accuracies of the groups are displayed superimposed on a map, it is possible to provide a display that helps the user adjust the orientation of the sensor being operated.

For example, the calculation device displays accuracies of the groups while the sensor is detecting light from the object.

With this, it is possible to provide a display that helps the user adjust the orientation of the sensor being operated while the user is detecting light from an object.

For example, the calculation device calculates a direction opposite to a composite direction of two or more normal directions of two or more three-dimensional points belonging to a first group included in the groups.

This makes it possible to calculate a direction corresponding to each of the groups.

Note that the calculation device may calculate a direction opposite to a normal direction of a representative point among the two or more three-dimensional points, instead of calculating a direction opposite to a composite direction of two or more normal directions of two or more three-dimensional points belonging to a first group included in the groups.

For example, the calculation device includes a processor and memory, and the processor performs the above processing using the memory.

### Other Embodiments

Hereinbefore, the calculation method and the like according to an embodiment of the present disclosure has been described, but the present disclosure is not limited to this embodiment.

For example, in the above embodiment, the voxels (subspaces) are exemplified as rectangular parallelepiped, but they may be of any shape, such as a pyramid shape. The voxels may each have the same shape or may have different shapes.

Capturing unit 111 may capture a visible light image or a non-visible light image (for example, an infrared image). When using an infrared image, capturing is possible even in dark environments such as at night.

Capturing unit 111 may be a monocular camera or may include a plurality of cameras like a stereo camera. Using a calibrated stereo camera can improve the accuracy of the estimation of the position and posture of capturing unit 111 in three dimensions estimated by position and posture estimation unit 112.

Capturing unit 111 may be a device capable of capturing depth images, such as an RGB-D sensor. In such cases, since depth images that serve as three-dimensional information can be obtained, the accuracy of the estimation of the position and posture of capturing unit 111 can be improved. Moreover, the depth image can be utilized as information for position alignment during the integration of three-dimensional postures to be described later.

The expressions "or greater" and "less than" and their equivalents used above are used in the sense of comparing values across a threshold, and may be replaced with "greater than" and "or less", respectively.

For example, each processing unit included in the capturing device and the like according to the above-described embodiment may be implemented as a large scale integrated (LSI) circuit, which is an integrated circuit. These units may be integrated into individual chips, or a portion or all of the units may be integrated into one chip.

Circuit integration is not limited to LSI; the units may be implemented using dedicated circuits or a general-purpose processor, for example. A field programmable gate array (FPGA) which allows programming after manufacturing of the LSI circuits or a reconfigurable processor which allows reconfiguration of the connections and settings of circuit cells inside the LSI circuits may be used.

For example, in each of the above embodiments, each element may be configured using dedicated hardware, or may be implemented by executing a software program suitable for the element. Each element may be implemented by a program execution unit such as a central processing unit (CPU) or a processor reading and executing a software program recorded on a recording medium such as a hard disk or semiconductor memory.

For example, the present disclosure may be realized as a calculation device or the like that executes a calculation method or the like. The present disclosure may be realized as a program for causing a computer to execute the calculation method, or as a non-transitory recording medium on which the program is stored.

Moreover, the division of the function blocks in the block diagrams are mere examples. A plurality of function blocks may be realized as a single function block, a single function block may be divided into a plurality of function blocks, or a portion of functions of one block may be transferred to a different function block. A plurality of function blocks which share similar functions can be processed by standalone hardware or software in parallel or time-shared.

For example, the order in which the steps are executed in the flow charts are mere examples presented for illustrative purposes; the steps may be executed in a different order. Moreover, some of the steps may be executed at the same time as (in parallel with) other steps.

Hereinbefore, a calculation method and the like according to one or more aspects has been described based on an embodiment, but the present disclosure is not limited to this embodiment. Various modifications to the present embodiment that may be conceived by those skilled in the art, as well as embodiments resulting from combinations of elements from different embodiments, may also be included within the scope of one or more aspects as long as these do not depart from the essence of the present disclosure.

### [Industrial Applicability]

The present disclosure is applicable to capturing devices.

### [Reference Signs List]

- 101: capturing device
- 102: reconstruction device
- 111: capturing unit
- 112: position and posture estimation unit
- 113: position and posture integration unit
- 114: region detection unit
- 115: UI unit
- 116: control unit
- 117: image storage unit
- 118: position and posture storage unit
- 119: region information storage unit

## Claims

1. A calculation method comprising:
obtaining three-dimensional points that represent an object in a space on a computer, each of the three-dimensional points indicating a position on the object;
classifying each three-dimensional point in the three-dimensional points into one of groups based on a normal direction of the each three-dimensional point; and
calculating a second accuracy of each group in the groups, the second accuracy increasing with an increase of a first accuracy of at least one three-dimensional point belonging to the each group, wherein
the three-dimensional points are generated by a sensor detecting light from the object from different positions and in different directions, and
the normal direction of each three-dimensional point in the three-dimensional points is determined based on the different directions used to generate the each three-dimensional point.

2. The calculation method according to claim 1, wherein
the classifying includes:
dividing the space into subspaces; and
classifying each three-dimensional point in the three-dimensional points into the one of the groups based on the normal direction of the each three-dimensional point and a subspace in the subspaces that includes the each three-dimensional point.

3. The calculation method according to claim 2, wherein
a first subspace in the subspaces includes a first three-dimensional point and a second three-dimensional point included in the three-dimensional points,
a line extending in a normal direction of the first three-dimensional point intersects a first face among faces defining the first subspace, and
the classifying includes classifying the first three-dimensional point and the second three-dimensional point into a same group when a line extending in a normal direction of the second three-dimensional point intersects the first face.

4. The calculation method according to any one of claims 1 to 3, wherein
the sensor is any one or combination of a LiDAR sensor, a depth sensor, and an image sensor.

5. The calculation method according to any one of claims 1 to 4, wherein
for each three-dimensional point in the three-dimensional points, a composite direction of the different directions used to generate the each three-dimensional point is opposite to the normal direction of the each three-dimensional point.

6. The calculation method according to claim 2, wherein
each of the groups corresponds to any one of faces defining the subspaces,
the classifying includes classifying each three-dimensional point in the three-dimensional points into the one of the groups that corresponds to, among the faces defining the subspace including the each three-dimensional point, an intersecting face that intersects a line extending in the normal direction of the each three-dimensional point, and
the calculation method further comprises displaying the intersecting face in a color according to an accuracy of the group corresponding to the intersecting face.

7. The calculation method according to claim 6, wherein
the displaying includes displaying the intersecting face in one color when the accuracy of the group corresponding to the intersecting face is greater than or equal to a predetermined accuracy and in a different color when the accuracy of the group corresponding to the intersecting face is less than the predetermined accuracy.

8. The calculation method according to claim 2, wherein
each of the groups corresponds to any one of the subspaces, and
the calculation method further comprises displaying each subspace in the subspaces in a color according to an accuracy of the group corresponding to the each subspace.

9. The calculation method according to claim 8, wherein
the displaying includes displaying, among the subspaces, only a subspace corresponding to a group with an accuracy less than a predetermined accuracy.

10. The calculation method according to any one of claims 1 to 9, wherein
the calculating includes, for each group in the groups, extracting a predetermined number of three-dimensional points from one or more three-dimensional points belonging to the each group, and calculating an accuracy of the each group based on an accuracy of each of the predetermined number of three-dimensional points extracted.

11. The calculation method according to any one of claims 1 to 10, wherein
the calculating includes calculating an accuracy of each group in the groups based on a reprojection error indicating an accuracy of each of one or more three-dimensional points belonging to the each group.

12. The calculation method according to any one of claims 1 to 11, further comprising:
displaying accuracies of the groups superimposed on a second three-dimensional model that is formed of at least a portion of the three-dimensional points and has a lower resolution than a first three-dimensional model formed of the three-dimensional points.

13. The calculation method according to claim 12, wherein
the displaying includes displaying the accuracies of the groups superimposed on a bird's-eye view of the second three-dimensional model.

14. The calculation method according to any one of claims 1 to 11, wherein
the sensor is an image sensor, and
the calculation method further comprises displaying accuracies of the groups superimposed on an image captured by the image sensor and used to generate the three-dimensional points.

15. The calculation method according to any one of claims 1 to 11, further comprising:
displaying accuracies of the groups superimposed on a map of a target space in which the object is located.

16. The calculation method according to any one of claims 1 to 15, further comprising:
displaying accuracies of the groups while the sensor is detecting light from the object.

17. The calculation method according to any one of claims 1 to 16, further comprising:
calculating a direction opposite to a composite direction of two or more normal directions of, among the three-dimensional points, two or more three-dimensional points belonging to a first group included in the groups.

18. A calculation device comprising:
a processor; and
memory, wherein
using the memory, the processor executes:
obtaining three-dimensional points that represent an object in a space on a computer, each of the three-dimensional points indicating a position on the object;
classifying each three-dimensional point in the three-dimensional points into one of groups based on a normal direction of the each three-dimensional point; and
calculating a second accuracy of each group in the groups, the second accuracy increasing with an increase of a first accuracy of at least one three-dimensional point belonging to the group, wherein
the three-dimensional points are generated by a sensor detecting light from the object from different positions and in different directions, and
the normal direction of each three-dimensional point in the three-dimensional points is determined based on the different directions used to generate the each three-dimensional point.
